# EUROPEAN PATENT APPLICATION

(11) **EP 4 660 860 A1**
(43) Date of publication of application: **10.12.2025**
(21) Application number: 23920030.6
(22) Date of filing: 28.12.2023
(51) Int. Cl.: G06F 21/64, G06F 21/10, H04L 9/32

(54) **AUTHENTICITY VERIFICATION SYSTEM, CONTENT MANAGEMENT APPARATUS, CONTENT GENERATION APPARATUS, CONTROL METHODS FOR SAME, AND PROGRAMS FOR SAME**

(30) Priority: 30.01.2023 JP 2023012105
(71) Applicant: Canon Kabushiki Kaisha, Tokyo, 146-8501 (JP)
(72) Inventor: TASHIRO Daichi, Tokyo 146-8501 (JP)
(74) Representative: Canon Europe Limited
(86) International application number: PCT/JP2023/047238
(87) International publication number: WO 2024/161895

(57) **Abstract**

The present invention is provided to enable determination of not only whether content is tampered by an invalid user but also whether an original content before change is the first content generated by a reliable content generation apparatus. A content management apparatus of the present invention receives content in content generation from the content generation apparatus and stores the generated content in a storage device. The content management apparatus acquires content to be determined and provenance information added to the content from a user terminal. The content management apparatus determines authenticity of the content to be determined based on whether the content in content generation corresponding to the content to be determined is stored in the storage device and a result of verification based on the provenance information. The content management apparatus notifies the user terminal of a result of determination.

## Description

### Technical Field

The present invention relates to a technique to verify authenticity of content.

### Background Art

Information sharing via the Internet has been activated in recent years and everyone is capable of releasing and sending out a variety of information to a large number of unspecified people. In addition, digital images are capable of being subjected to a variety of processing. In such a situation, information may be sent out from an unreliable source or released information may be invalidly tampered.

Generation of a hash value from an image in shooting and output of the image with the generated hash value by a digital camera and generation of a hash value from an image and verification of tampering of the image using the hash value added to the image by a verification apparatus have hitherto been known (refer to PTL 1).

In addition, addition of metadata indicating the content of editing for an image to the image has hitherto been proposed in order to certify the source, the background, and the provenance of the image (refer to NPL 1).

### Citation List

### Patent Literature

PTL 1: Japanese Patent Laid-Open No. 2011-124663

### Non Patent Literature

NPL 1: Coalition for content Provenance and Authenticity (C2PA), "C2PA Specifications", <Technical Specifications Version 1.2>, [online], November 03, 2022, [Search on January 23, 2023], the Internet <URL:https://c2pa.org/specifications/specifications/1.2/spec s/C2PA_Specification.html>

### Summary of Invention

### Technical Problem

With the technique in PTL 1, a user is capable of knowing whether the image is modified. However, the user is not capable of knowing whether the modification of the image is editing by a valid user or tampering by an invalid user.

Furthermore, with the technique in NPL 1, the user is capable of knowing not only the presence of the modification of the image but also whether the modification of the image is editing by a valid user or tampering by an invalid user based on specified metadata. However, the user is not capable of determining authenticity including whether the image itself and an original image before editing is the first image generated by a reliable imaging apparatus in shooting.

### Solution to Problem

One aspect of the present invention includes means for receiving content in content generation from a content generation apparatus, means for storing the content in content generation in a storage device, means for acquiring content to be determined and provenance information added to the content to be determined, and means for determining authenticity of the content to be determined based on whether the content in content generation corresponding to the content to be determined is stored in the storage device and a result of verification based on the provenance information.

### Advantageous Effects of Invention

The present invention achieves the effect of enabling verification of not only whether content is tampered but also whether the original content is content in content generation by a reliable content generation apparatus. Brief Description of Drawings

[Fig. 1] Fig. 1 is a diagram illustrating an example of the configuration of an authenticity verification system of the present invention.
[Fig. 2] Fig. 2 is a block diagram illustrating an example of the configuration of an imaging apparatus of the present invention.
[Fig. 3] Fig. 3 is a block diagram illustrating an example of the configuration of a content management apparatus of the present invention.
[Fig. 4] Fig. 4 is a block diagram illustrating an example of a user terminal of the present invention.
[Fig. 5] Fig. 5 is a flowchart indicating an example of an operation of the imaging apparatus of the present invention.
[Fig. 6] Fig. 6 is a diagram illustrating an example of the configuration of an image file of the present invention.
[Fig. 7] Fig. 7 is a flowchart indicating an example of an operation of the content management apparatus of the present invention.
[Fig. 8] Fig. 8 is a flowchart indicating an example of an operation of the content management apparatus of the present invention.
[Fig. 9A] Fig. 9A is a diagram illustrating an example of a screen displayed in the user terminal of the present invention.
[Fig. 9B] Fig. 9B is a diagram illustrating an example of a screen displayed in the user terminal of the present invention.
[Fig. 9C] Fig. 9C is a diagram illustrating an example of a screen displayed in the user terminal of the present invention.
[Fig. 9D] Fig. 9D is a diagram illustrating an example of a screen displayed in the user terminal of the present invention.

### Description of Embodiments

Preferred embodiments of the present invention will herein be described in detail using examples with reference to the drawings. However, components described in the embodiments are only examples and the scope of the invention is not intended to be limited to the components.

### (First embodiment)

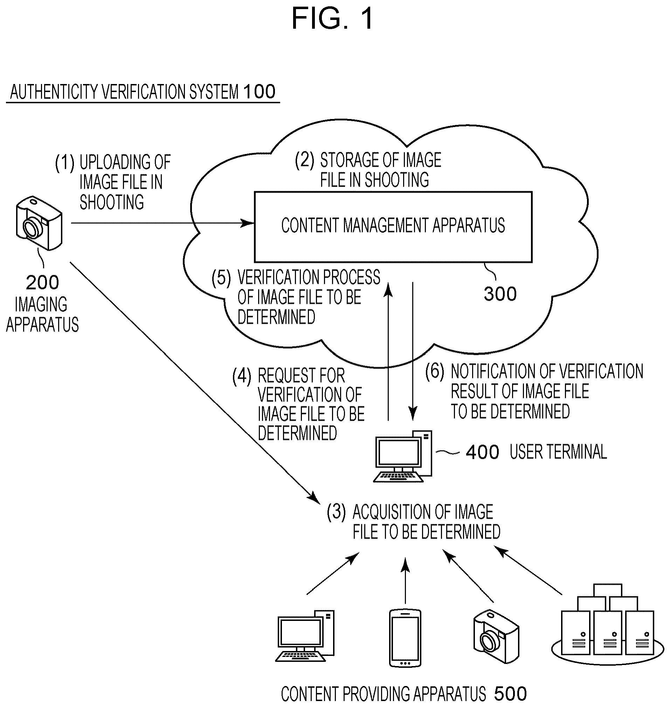

Fig. 1 is a diagram illustrating an example of the configuration of an authenticity verification system 100. The authenticity verification system 100 includes an imaging apparatus 200, a content management apparatus 300, a user terminal 400, and a content providing apparatus 500. The content management apparatus 300 communicates with the imaging apparatus 200 and the user terminal 400 via a network to transmit and receive a variety of data and information, such as a content file. An image file is described as an example of the content file in the present embodiment. The content file is not limited to the image file and may be an audio file or the like.

The imaging apparatus 200 uploads the image file in shooting (in content generation) to the content management apparatus 300 via the network. The content management apparatus 300 stores the image file in shooting in a database system and saves the database in a storage device.

Upon acceptance of a request for verification of an image file to be determined from the user terminal 400, the content management apparatus 300 performs a verification process of the image file in a manner described below and notifies the user terminal 400 of the result of verification.

The user terminal 400 is capable of acquiring the image file to be determined from an external apparatus, such as the imaging apparatus 200 or the content providing apparatus 500. The content providing apparatus 500 is, for example, a personal computer (PC), a smartphone, a tablet, an imaging apparatus different from the imaging apparatus 200, or a World Wide Web (WEB) server apparatus (an image release site or the like). The content providing apparatus 500 may have an editing tool, such as image editing application software, installed therein and may be capable of freely editing the image file. In addition, the content providing apparatus 500 may supply the image file acquired from another content providing apparatus to the user terminal 400. Accordingly, the image file acquired from the external apparatus by the user terminal 400 may not be modified from the image file in shooting, may be validly edited, or may be invalidly tampered. However, the user terminal 400 is not capable of correctly determining these cases. Consequently, the user terminal 400 requests determination of authenticity of the image file of the content management apparatus 300 in order to confirm the authenticity of the image file acquired from the external apparatus.

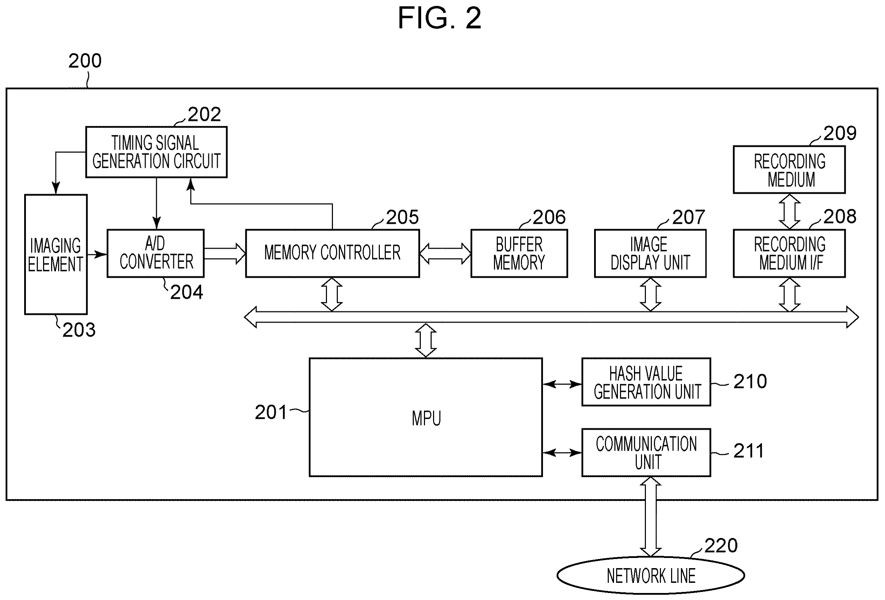

Fig. 2 is a block diagram illustrating an example of the configuration of the imaging apparatus 200. The imaging apparatus 200 is an electronic device, such as a digital camera, a digital video camera, or a mobile phone or a computer apparatus having a camera function. The imaging apparatus 200 is an example of a content generation apparatus and may be an apparatus that generates image data from a graphic image drawn by a user, an apparatus that records sound to generate audio data, an apparatus that generates audio data of a music composed by the user, or the like.

Referring to Fig. 2, the imaging apparatus 200 includes a micro processing unit (MPU) 201, a timing signal generation circuit 202, an imaging element 203, an analog-to-digital (A/D) converter 204, a memory controller 205, a buffer memory 206, and an image display unit 207. In addition, the imaging apparatus 200 includes a recording medium interface (I/F) 208, a recording medium 209, a hash value generation unit 210, and a communication unit 211.

The MPU 201 is a microcontroller for performing control concerning the system of the imaging apparatus 200, such as a shooting sequence.

The timing signal generation circuit 202 generates a timing signal required to work the imaging element 203.

The imaging element 203 is an imaging element, such as a charge coupled device (CCD) or a complementary metal oxide semiconductor (CMOS), that converts reflected light from an object into an electric signal (analog image data) and reads out the analog image data to the A/D converter 204.

The A/D converter 204 converts the analog image data read out from the imaging element 203 into digital image data. The digital image data is hereinafter simply referred to as the "image data".

The memory controller 205 controls reading and writing of the image file from and to the buffer memory 206, a refreshing operation of the buffer memory 206, and so on. The image file is an image file which is generated by the MPU 201 in a manner described below and to which metadata of the image data is added to the image data. The image file will be described in detail below.

The buffer memory 206 stores the image file.

The image display unit 207 displays the image file stored in the buffer memory 206.

The recording medium I/F 208 is an interface for controlling reading and writing of data from and to the recording medium 209.

The recording medium 209 is, for example, a storage medium, such as a memory card, removable from the imaging apparatus 200 and stores programs, the image files, and so on.

The hash value generation unit 210 executes a hash function to the image file stored in the buffer memory 206 to generate (calculate) a hash value. The MPU 201 may generate the hash value, instead of the hash value generation unit 210. A process to generate the hash value will be described in detail below.

The communication unit 211 is connected to a network line 220, such as the Internet, to transmit and receive data to and from the external apparatus.

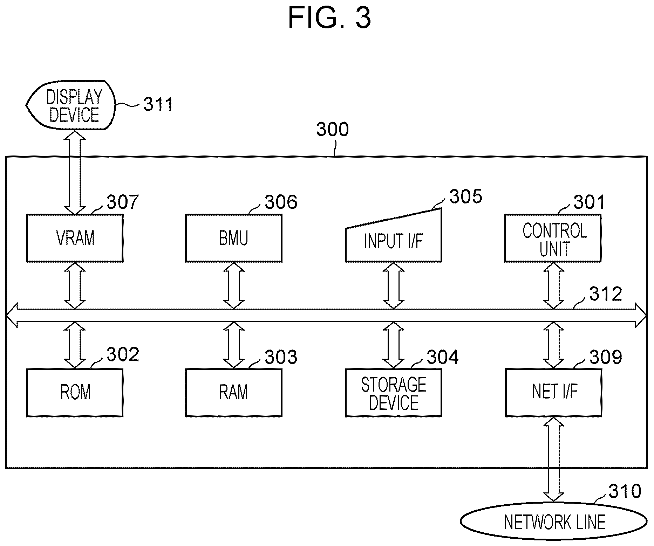

Fig. 3 is a block diagram illustrating an example of the configuration of the content management apparatus 300. A server computer apparatus is described as an example of the content management apparatus 300 in the present embodiment. The content management apparatus 300 may be realized by a single server computer apparatus or may be realized by distributing the respective functions of the content management apparatus 300 to multiple server computer apparatuses of a required number. When the content management apparatus 300 is composed of the multiple server computer apparatuses, the multiple server computer apparatuses are connected to each other via a communication line, such as a local area network (LAN).

Referring to Fig. 3, a control unit 301 controls the server computer apparatus and is, for example, a central processing unit (CPU). A read only memory (ROM) 302 stores programs and parameters that do not necessitate change. A random access memory (RAM) 303 temporarily stores programs and data supplied from the external apparatus or the like. A storage device 304 is a hard disk drive (HDD) installed in the server computer apparatus, a solid state drive (SSD) composed of a flash memory, a hybrid drive using both the hard disk and the flash memory, a memory card, or the like. The storage device 304 stores programs, such as an operating system (OS). In addition, the storage device 304 stores a variety of data, such as the image file in shooting described below, required to realize the present embodiment. An input interface 305 accepts an operation by the user and is used for connection to an input device, such as a pointing device or a keyboard, with which data is input. A bit move unit (BMU) 306 controls data transfer, for example, between memories (for example, a video RAM (VRAM) 307 and another memory) and between a memory and each input-output (I/O) device (for example, a network interface 309). The VRAM 307 draws an image to be displayed in a display device 311. The image generated in the VRAM 307 is transmitted to the display device 311 in accordance with a predetermined standard and the display device 311 displays the image. The network interface 309 is used to connect the content management apparatus 300 to a network line 310, such as the Internet. A system bus 312 connects the respective units 301 to 309 so as to be capable of communication.

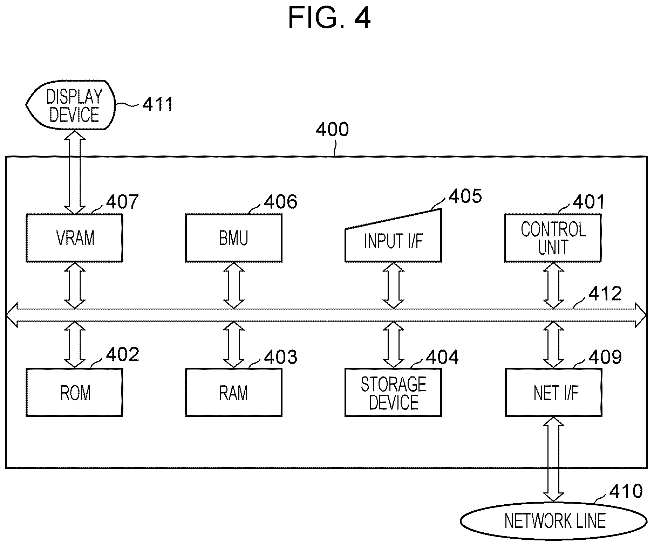

Fig. 4 is a block diagram illustrating an example of the configuration of the user terminal 400. A personal computer apparatus (PC) is described as an example of the user terminal 400 in the present embodiment. The user terminal 400 is not limited to the PC and may be a smartphone or a tablet device.

Referring to Fig. 4, a control unit 401 controls the personal computer apparatus and is, for example, a central processing unit (CPU). A read only memory (ROM) 402 stores programs and parameters that do not necessitate change. A random access memory (RAM) 403 temporarily stores programs and data supplied from the external apparatus or the like. A storage device 404 is a hard disk drive (HDD) installed in the personal computer apparatus, a solid state drive (SSD) composed of a flash memory, a hybrid drive using both the hard disk and the flash memory, a memory card, or the like. The storage device 404 stores programs, such as an operating system (OS). In addition, the storage device 404 stores a variety of data, such as the image file to be determined described below, required to realize the present embodiment. An input interface 405 accepts an operation by the user and is used for connection to an input device, such as a pointing device or a keyboard, with which data is input. A bit move unit (BMU) 406 controls data transfer, for example, between memories (for example, a video RAMs (VRAMs) 407 and 337 and another memory) and between a memory and each input-output (I/O) device (for example, a network interface 409). The VRAM 407 draws an image to be displayed in a display device 411. The image generated in the VRAM 407 is transmitted to the display device 411 in accordance with a predetermined standard and the display device 411 displays the image. The network interface 409 is used to connect the user terminal 400 to a network line 410, such as the Internet. A system bus 412 connects the respective units 401 to 409 so as to be capable of communication.

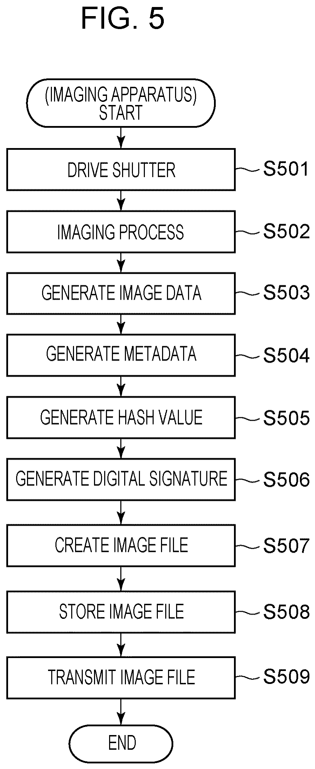

A process to generate the image file in shooting and upload the image file to the content management apparatus 300, which is performed by the imaging apparatus 200, will be described with reference to a flowchart in Fig. 5. The process is realized by the MPU 201 in the imaging apparatus 200, which executes the programs stored in the recording medium 209 and so on. The process is started upon acceptance of a shooting start operation, such as depression of a shooting button of the imaging apparatus 200 by a shooter, by the imaging apparatus 200.

First, the MPU 201 drives a shutter (not illustrated) arranged at the object side with respect to the imaging element 203 in order to control the exposure time (S501). The MPU 201 performs an imaging process to convert light from the object, which is received by the imaging element 203 via the shutter, into an electric signal (the analog image data) (S502). The MPU 201 performs image processing, such as a development process and an encoding process, to the electric signal resulting from the imaging process to generate the image data (S503).

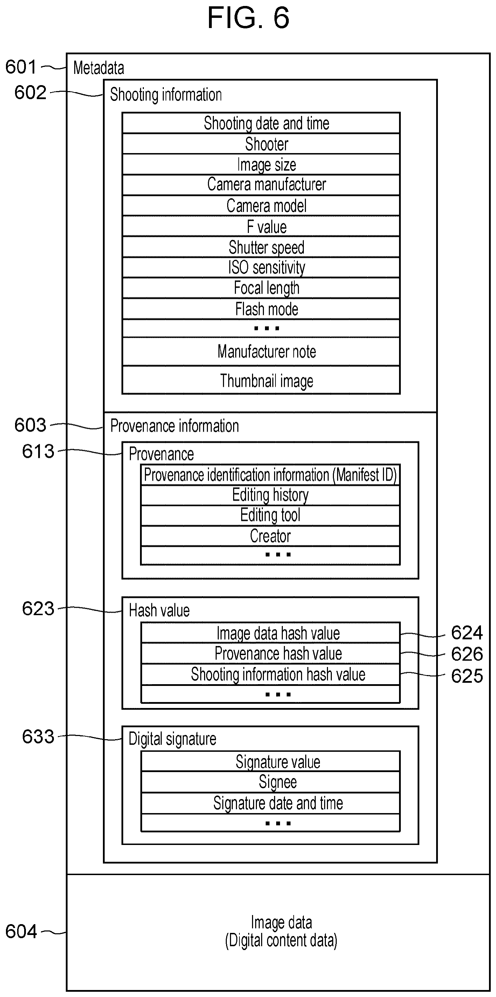

Next, the MPU 201 generates Metadata 601 including Shooting information 602 and Provenance information 603 about Image data 604 illustrated in Fig. 6 (S504). The Shooting information 602 is information when the imaging process to generate the Image data 604 is performed and includes, for example, a shooting date and time, a shooter, an image size, a manufacturer and a model of the imaging apparatus 200, various shooting parameters set in shooting, a shooting location, a thumbnail image, and so on. The Shooting information 602 is generated according to a predetermined technical standard (for example, Exchangeable image file format (EXIF).

The Provenance information 603 is information to certify the credibility of the Image data 604 and is used to verify the source and the provenance of the Image data 604. The Provenance information 603 is generated according to a predetermined technical standard (for example, Coalition for Content Provenance and Authenticity (C2PA)) and has a specified structure. The Provenance information 603 includes Provenance (Assertion) 613, Hash value 623, and Digital signature 633. The Hash value 623 and the Digital signature 633 are used to ensure the Provenance 613. Provenance identification information (Manifest ID) for uniquely identifying the provenance, an editing history indicating the content of editing of the Image data 604, an editing tool indicating the tool used for the editing, and a creator of the Image data 604 are stored in the Provenance 613. Since the Image data 604 generated in Step S503 has been just generated through shooting and has not been edited, information indicating "generated" is stored in the editing history and information indicating the imaging apparatus 200 is stored in the editing tool.

Next, the MPU 201 executes the hash function to binary data of each of the Image data 604 and the Provenance 613 to generate the Hash value 623 (S505). The hash value may also be generated from the binary data of the Shooting information 602.

The MPU 201 generates the Digital signature 633 (S506). The Digital signature 633 includes information indicating a signature value, a signee, and a signature date and time. The signature value is generated by encrypting the Hash value 623 generated in S505 using a secret key that is prepared in advance. A public key paired with the secret key used here is also stored in the Digital signature 633. In the present embodiment, information indicating the manufacturer of the imaging apparatus 200 is stored as the signee. The manufacturer of the imaging apparatus 200 is stored in the storage device 304 in the content management apparatus 300 as the reliable signee who generates the image file in shooting as an original image. Accordingly, the fact that the image file is reliable is capable of being indicated by adding the Digital signature 633 including such a signee to an image file 600. Instead of the manufacturer, the model of the imaging apparatus 200 may be used as the signee. The date and time when the generation of the digital signature is completed is stored in the signature date and time. The shooting date and time may also be stored in the Provenance 613.

The MPU 201 adds the Shooting information 602 and the Provenance information 603 to the Image data 604 as the Metadata 601 to create the image file 600 (S507). Here, the image file is generated in a Joint Photographic Experts Group (JPEG) format when the Image data 604 is a still image and is generated in a Moving Picture Experts Group (MPEG) format when the Image data 604 is a movie.

The MPU 201 transmits the image file 600 to the content management apparatus 300 via the network (S509). In addition, the MPU 201 stores the image file 600 in the recording medium 209. It is sufficient for the image file 600 recorded in the recording medium 209 to at least include the Image data 604 and the Shooting information 602.

As described above, in the present embodiment, upon shooting by the imaging apparatus 200, the image file 600 is uploaded to the content management apparatus 300. The content management apparatus 300 acquires the image file generated by the reliable imaging apparatus 200 in shooting and saves the image file in the storage device 304.

The image file 600 may be edited by the content providing apparatus 500. If the image file 600 is edited using an authorized editing tool with a valid process, the Provenance information 603 is newly generated based on the content of editing according to a predetermined technical standard and the Provenance information 603 that is newly generated is added to the Metadata 601 in the image file 600 for storage. The Provenance information 603 is newly generated each time the image file 600 is edited and is added to the Metadata 601 in the image file 600 for storage. If the editing of the image file 600 is performed using an unauthorized editing tool or is performed with an invalid process, the Provenance information 603 may not be added to the image file 600 or the provenance information added to the image file 600 does not match the predetermined technical standard.

The user may freely select the original image file in accordance with a predetermined technical standard to set the selected image file. For example, not the image file in shooting but an image file that is edited may be used as the origin and an image file that is further edited may be the current image file. Accordingly, although the fact that the image file is the original image file may be found from the provenance information in the predetermined technical standard, it is not to determine whether the image file is generated in shooting by the reliable imaging apparatus.

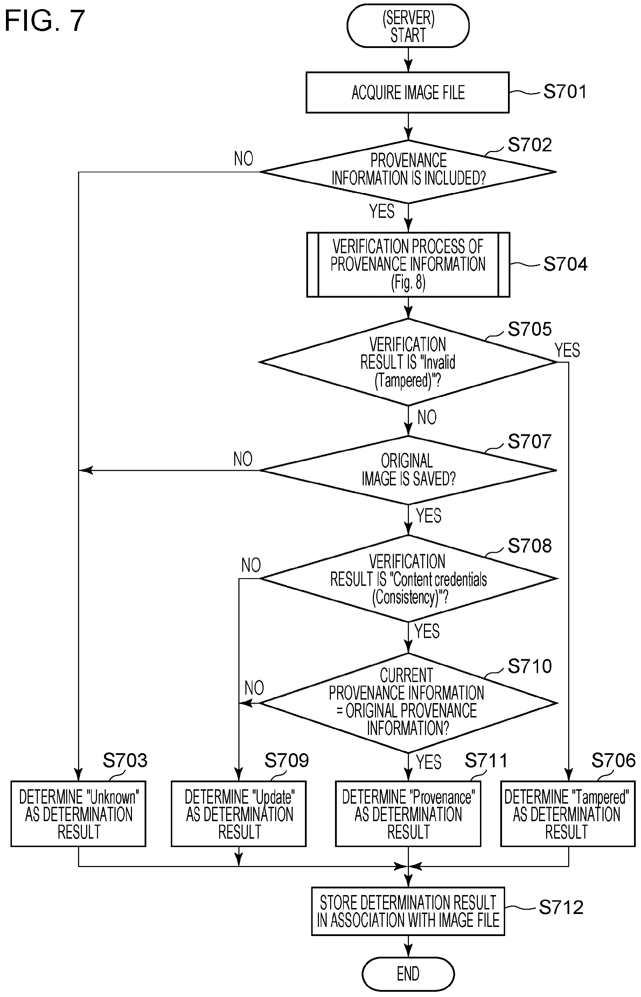

A process to determine the authenticity of the image file in response to a request from the user terminal 400, which is performed by the content management apparatus 300, will be described with reference to a flowchart in Fig. 7. The process is realized by the control unit 301 in the content management apparatus 300, which executes the programs stored in the storage device 304 and so on.

First, the control unit 301 receives the image file to be determined from the user terminal 400 via the network (S701).

Next, the control unit 301 determines whether the image file to be determined includes the Provenance information 603 (S702). If the Provenance information 603 is not included in the image file to be determined (No in S702), the control unit 301 determines "Unknown" as the result of determination (S703). Then, the process goes to Step S712. If the Provenance information 603 is included in the image file to be determined (Yes in S702), the control unit 301 performs the verification process of the Provenance information 603 described below (S704).

The control unit 301 determines whether the result of verification of the Provenance information 603 in Step S704 is "Invalid (Tampered)" (S705). If the result of verification is "Invalid (Tampered)" (Yes in S705), the control unit 301 determines "Tampered (Evidence of tampering)" as the result of determination (S706). Then, the process goes to Step S712.

If the result of verification is not "Invalid (Tampered)" (No in S705), the control unit 301 determines whether the image file in shooting, which corresponds to the image file to be determined, is saved in the storage device 304 (S707). The control unit 301 performs the determination based on whether the image file having the same provenance identification information as the provenance identification information in the original Provenance information 603 in the image file to be determined as the current Provenance information 603 is saved in the storage device 304.

If the image file in shooting is not saved (No in S707), the control unit 301 determines "Unknown" as the result of determination (S703). Then, the process goes to Step S712. If the image file in shooting is saved (Yes in S707), the control unit 301 determines whether the result of verification of the Provenance information 603 in Step S704 is "Inconsistency" (S708).

If the result of verification of the Provenance information 603 is "Inconsistency" (Yes in S708), the control unit 301 determines "Updated" as the result of determination (S709). Then, the process goes to Step S712.

If the result of determination is not "Inconsistency" (Yes in S708), the control unit 301 determines whether the current Provenance information 603 in the image file to be determined is the original Provenance information 603. In other words, the control unit 301 determines whether the image file to be determined only includes the original Provenance information 603. Since the image file includes not only the origin but also the Provenance information 603 in each editing time if the editing has been performed to the image file, the current Provenance information 603 does not coincide with the original provenance information.

If the current Provenance information 603 does not coincide with the original provenance information (No in S710), the process goes to Step S709. If the current Provenance information 603 coincides with the original provenance information (Yes in S710), the control unit 301 determines "Provenance (Origin)" as the result of determination (S711). Then, the process goes to Step S712.

The control unit 301 stores the result of determination determined in the above manner in the storage device 304 in association with the image file to be determined received in Step S701 (S712).

The result of determination "Provenance (Origin)" indicates that the image file to be determined is the same as the image file in shooting.

The result of determination "Updated" indicates that the image file to be determined results from valid editing of the Metadata 601 or the Image data 604 in the image file in shooting.

The result of determination "Tampered (Evidence of tampering) indicates that the image file to be determined does not result from valid editing but has evidence of tampering.

The result of determination "Unknown" indicates that valid editing of the image file to be determined is unknown or the relationship with the image file in shooting is unknown.

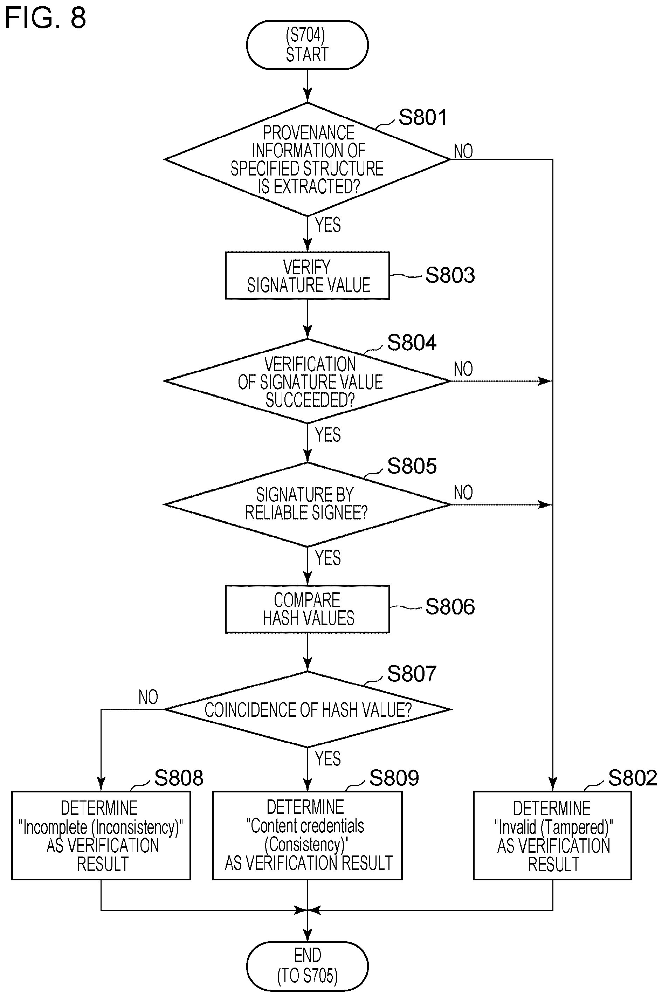

The verification process of the Provenance information 603 in Step S704 will be described with reference to a flowchart in Fig. 8. The process is realized by the control unit 301 in the content management apparatus 300, which executes the programs stored in the storage device 304 and so on.

First, the control unit 301 extracts the Provenance information 603 having a specified structure from the image file to be determined. If the Provenance information 603 having a specified structure is not extracted (No in S801), the control unit 301 determines "Invalid (Tampered)" as the result of verification of the Provenance information 603 (S802). Then, the process goes to Step S705. If the Provenance information 603 having a specified structure is extracted (Yes in S801), the control unit 301 verifies the signature value of the Digital signature 633 in the Provenance information 603 in the image file to be determined using the public key (S803).

The control unit 301 determines whether the verification of the signature value succeeded (S804). If the Digital signature 633 is generated using the secret key paired with the public key, the signature value is capable of being correctly decoded. In addition, the control unit 301 executes the hash function to the binary data of the Provenance 613 to generate the hash value and also determines whether the generated hash value coincides with the hash value decoded using the public key. Accordingly, if the signature value is decoded using the public key and the generated hash value coincides with the hash value decoded using the public key, the control unit 301 determines that the verification of the signature value succeeded. The control unit 301 otherwise determines that the verification of the signature value failed.

If the verification of the signature value failed (No in S804), the process goes to Step S802. If the verification of the signature value succeeded (Yes in S804), the control unit 301 determines whether the Digital signature 633 in the image file to be determined is generated by the reliable signee (S805). Information about the reliable signee is stored in the storage device 304 in advance and the control unit 301 performs the determination based on whether the signee coinciding with the signee 635 is stored in the storage device 304.

If the Digital signature 633 is not generated by the reliable signee (No in S805), the process goes to Step S802. If the Digital signature 633 is generated by the reliable signee (Yes in S805), the control unit 301 executes the hash function to the binary data of the Image data 604 in the image file to be determined to generate the hash value. Then, the control unit 301 compares the generated hash value with Image data hash value 624 in the image file to be determined (S806). The control unit 301 determines whether the hash values coincide with each other based on the result of comparison (S807). If the hash values do not coincide with each other (No in S807), the control unit 301 determines "Incomplete (Inconsistency)" as the result of verification of the Provenance information 603 (S808). Then, the process goes to Step S705. The control unit 301 may execute the hash function to the binary data of the Shooting information 602 in the image file to be determined to generate the hash value and compares the generated hash value with Shooting information hash value 625 in the image file to be determined to determine whether the hash values coincide with each other.

If the hash values coincide with each other (Yes in S808), the control unit 301 determines "Content credentials (Consistency)" as the result of verification of the Provenance information 603 (S809). Then, the process goes to Step S705.

The result of verification "Content credentials (Valid)" indicates that the image file to be determined holds the correct provenance information and is generated by the reliable signee.

The result of verification "Incomplete (Inconsistency)" indicates that the Image data 604 in the image file to be determined is inconsistent with the Provenance information 603. For example, the inconsistency occurs when only the Image data 604 is edited and the Provenance 613 is not edited or when the Image data 604 is not edited but only the Provenance 613 is edited. This may occur when the image file 600 is edited by the unauthorized editing tool.

The result of verification "Invalid (Evidence of tampering)" indicates that evidence of tampering is detected in the image file based on the provenance information or the image file is generated by the unreliable signee.

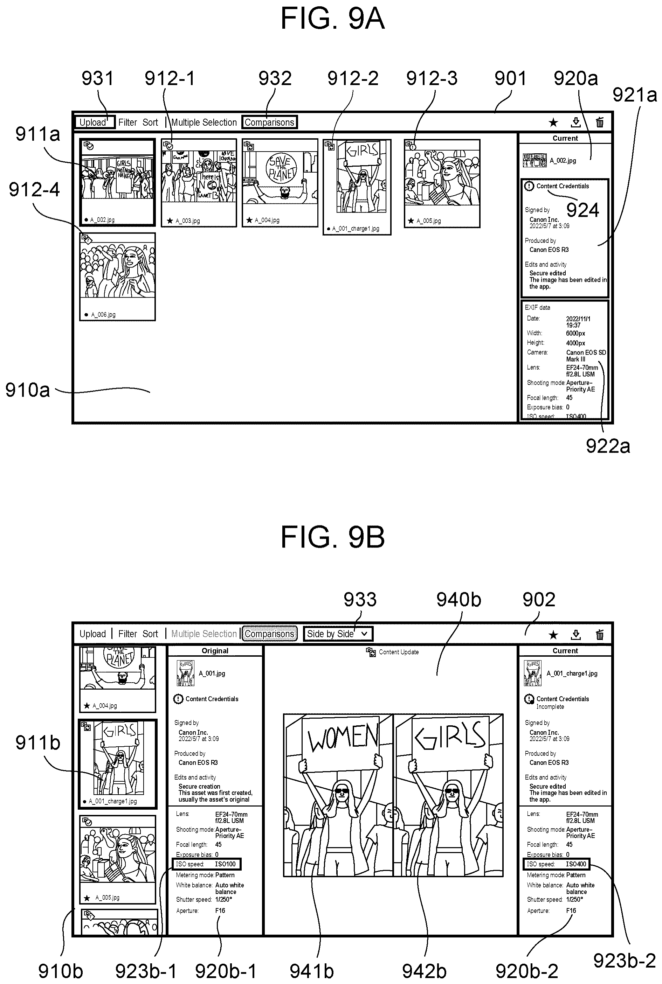

Screens on which information about the image file the authenticity of which is determined by the content management apparatus 300 is displayed will be described with reference to Fig. 9A to Fig. 9D. The following screens are displayed in the display device 411 in the user terminal 400 by the content management apparatus 300, which generates data to be displayed on each screen in response to an access from the user terminal 400 and transmits the generated data to be displayed on each screen to the user terminal 400. The user terminal 400 activates a Web browser application program and another application program and accesses a predetermined address of the content management apparatus 300 to receive the data to be displayed on each screen and display the received data in the display device 411.

The user terminal 400 displays a main screen 901 in the display device 411 and reads out the image file to be determined from the storage device 404 upon depression of an Upload button 931 with an operation by the user to transmit the read-out image file to be determined to the content management apparatus 300 via the network.

Thumbnail images of the multiple image files, which are received from the user terminal 400 by the content management apparatus 300 and which are subjected to an authenticity determination process, are displayed in a list field 910a. A thumbnail image 911a is displayed with icons 912 that indicate the results of determination of the authenticity of the corresponding image files. An icon 912-1 indicates "Provenance (Origin)", an icon 912-2 indicates "Updated", an icon 912-3 indicates "Tampered (evidence of tampering)", and an icon 912-4 indicates "Unknown". The metadata about the image file corresponding to the thumbnail image 911a selected in the list field 910a is displayed in a metadata field 920a. A variety of data about the Provenance information 603 is displayed in a provenance field 921a and a variety of data about the Shooting information 602 is displayed in a shooting information field 922a. In addition, information 924 indicating the result of verification of the verification process of the Provenance information 603 in Fig. 8 is also displayed in the metadata field 920a.

The main screen 901 is switched to a comparison screen 902 displayed in Fig. 9B in response to a selection operation by the user on a Comparisons icon 932 on the main screen 901. A list field 910b is similar to the list field 910a. An image in shooting 941b corresponding to a thumbnail image 911b selected in the list field 910b and a current image 942b are displayed in a comparison field 940b so as to be arranged next to each other. The Metadata 601 about the image in shooting 941b corresponding to the thumbnail image 911b is displayed in a metadata field 920b-1 and the Metadata 601 about the current image 942b is displayed in a metadata field 920b-2. If any difference in the Metadata 601 occurs between the image in shooting 941b and the current image 942b, items 923b-1 and 923b-2 having the difference are highlighted. Although the items having the difference are surrounded by frame lines for highlighting in Fig. 9B, the items having the difference may be displayed in another mode as long as the items having the difference are capable of being identified. Although the items are highlighted in the metadata fields 920b-1 and 920b-2 of both the image in shooting 941b and the current image 942b in Fig. 9B, the items may be highlighted in only one of the metadata fields 920b-1 and 920b-2 of the image in shooting 941b and the current image 942b. The display format of the comparison field may be changed in accordance with the selection operation by the user for a pulldown 933. When "side-by side" is selected on the pulldown 933, the display in the comparison field 940b appears.

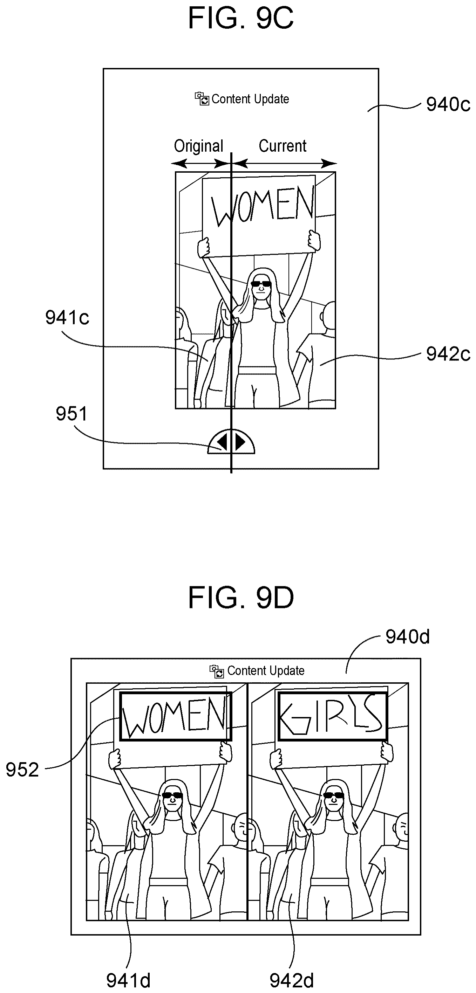

Fig. 9C illustrates a comparison field 940c when "overlay" is selected on the pulldown 933. An image in shooting 941c corresponding to the thumbnail image 911b and a current image 942c are displayed so as to be overlapped with each other in the comparison field 940c. The range in which the image in shooting 941c and the current image 942c are overlapped with each other for display is changed in accordance with a moving operation of a slider 951 by the user.

Fig. 9D illustrates a comparison field 940d when "highlighting" is selected on the pulldown 933. In the comparison field 940d, an image in shooting 941d corresponding to the thumbnail image 911b and a current image 942d are displayed so as to be arranged next to each other and portions 952 having the difference between the image in shooting 941d and the current image 942d are highlighted. Although the portions 952 having the difference are surrounded by frame lines for highlighting in Fig. 9D, the portions 952 having the difference may be displayed in another mode as long as the portions 952 having the difference are capable of being identified. Although the highlighting is performed in both the image in shooting 941d and the current image 942d in Fig. 9D, the highlighting may be performed in only one of the image in shooting 941d and the current image 942d.

An image in shooting 941 corresponding to a thumbnail image 911 is the Image data 604 in the image file 600 in shooting, which is saved in the storage device 304 and which is identified as the origin of the image file to be determined corresponding to the thumbnail image 911. The Metadata 601 displayed in a metadata field 920 is also the Metadata 601 in the image file 600 in shooting, which is saved in the storage device 304 and which is identified as the origin of the image file to be determined corresponding to the thumbnail image 911.

### (Other embodiments)

The present invention may be realized by a process in which a program realizing one or more functions of the above embodiments is supplied to a system or an apparatus via a network or a storage medium and one or more processors in the computer of the system or the apparatus reads out the program for execution. The present invention may be realized by a circuit (for example, an application specific integrated circuit (ASIC) realizing one or more functions.

The present invention is not limited to the embodiments described above and various modifications and changes may be made without departing from the spirit and scope of the present invention. Accordingly, the following claims are appended to publicize the scope of the present invention.

This application claims the benefit of Japanese Patent Application No. 2023-012105 filed January 30, 2023, which is hereby incorporated by reference herein in its entirety.

## Claims

1. A content management apparatus comprising:
means for receiving content in content generation from a content generation apparatus;
means for storing the content in content generation in a storage device;
means for acquiring content to be determined and provenance information added to the content to be determined; and
means for determining authenticity of the content to be determined based on whether the content in content generation corresponding to the content to be determined is stored in the storage device and a result of verification based on the provenance information.

2. The content management apparatus according to claim 1, further comprising:
means for determining whether current provenance information added to the content to be determined is generated in generation of the content,
wherein, if the current provenance information is generated in generation the content, it is determined that the content to be determined has the authenticity.

3. The content management apparatus according to claim 1, further comprising:
means for executing a hash function to the content to be determined to generate a hash value,
wherein the provenance information includes the hash value of the content to be determined,
wherein the result of verification includes information indicating a result of comparison between the generated hash value and the hash value included in the provenance information, and
wherein, if the content in content generation corresponding to the content to be determined is stored in the storage device and the result of verification indicates that the generated hash value coincides with the hash value included in the provenance information, it is determined that the content to be determined has the authenticity.

4. The content management apparatus according to claim 3,
wherein the provenance information includes a digital signature of the content to be determined, and
wherein, if the result of verification indicates that a signee of the digital signature is reliable, it is determined that the content to be determined has the authenticity.

5. The content management apparatus according to claim 3,
wherein the provenance information includes a digital signature of the content to be determined,
wherein the result of verification includes information indicating a result of verification of the digital signature using a public key, and
wherein, if the result of verification indicates that the verification of the digital signature succeeded, it is determined that the content to be determined has the authenticity.

6. The content management apparatus according to claim 3,
wherein the result of verification further includes information indicating whether the provenance information has a specified structure, and
wherein, if the result of verification indicates that the provenance information has the specified structure, it is determined that the content to be determined has the authenticity.

7. The content management apparatus according to claim 2, further comprising:
means for determining whether current provenance information added to the content to be determined is generated in generation of the content,
wherein, if the current provenance information is not generated in generation of the content, it is determined that the content to be determined results from updating of the content in generation of the content.

8. The content management apparatus according to claim 3,
wherein, if the content in content generation corresponding to the content to be determined is stored in the storage device and the result of verification indicates that the generated hash value does not coincide with the hash value included in the provenance information, it is determined that the content to be determined results from updating of the content in generation of the content.

9. The content management apparatus according to claim 3,
wherein the provenance information includes a digital signature of the content to be determined, and
wherein, if the result of verification indicates that a signee of the digital signature is not reliable, it is determined that the content to be determined has evidence of tampering.

10. The content management apparatus according to claim 3,
wherein the provenance information includes a digital signature of the content to be determined,
wherein the result of verification includes information indicating a result of verification of the digital signature using a public key, and
wherein, if the result of verification indicates that the verification of the digital signature failed, it is determined that the content to be determined has evidence of tampering.

11. The content management apparatus according to claim 3,
wherein the result of verification further includes information indicating whether the provenance information has a specified structure, and
wherein, if the result of verification indicates that the provenance information does not have the specified structure, it is determined that the content to be determined has evidence of tampering.

12. The content management apparatus according to claim 1,
wherein the content to be determined is received and acquired from a user terminal, the content management apparatus further comprising:
means for notifying the user terminal of a result of determination of the content to be determined.

13. The content management apparatus according to claim 12,
wherein the user terminal is notified of the result of determination by adding an icon with which the result of determination is capable of being identified to the content to be determined.

14. The content management apparatus according to claim 1,
wherein the content generation apparatus is an imaging apparatus and the content in content generation is an image in shooting.

15. The content management apparatus according to claim 14,
wherein the content is at least one of the image and metadata about the image.

16. The content management apparatus according to claim 1,
wherein the provenance information indicates a history of generation or editing of the content.

17. A content generation apparatus comprising:
means for generating content;
means for executing a hash function to the content to generate a hash value;
means for generating a digital signature by encrypting the hash value using a secret key;
means for adding information about the content generation apparatus to the digital signature as a signee;
means for generating provenance information indicating that the content is generated; and
means for transmitting the content, the hash value, the digital signature, the signee, and the provenance information to a content management apparatus.

18. The content generation apparatus according to claim 17,
wherein the content is at least one of an image of an object captured by imaging means and metadata about the image.

19. The content generation apparatus according to claim 17,
wherein the signee is at least one of a manufacturer and a model of the content generation apparatus.

20. An authenticity verification system comprising:
a content generation apparatus; and
a content management apparatus,
wherein the content generation apparatus includes
means for generating content,
means for executing a hash function to the content to generate a hash value,
means for generating a digital signature by encrypting the hash value using a secret key,
means for adding information about the content generation apparatus to the digital signature as a signee,
means for generating provenance information indicating that the content is generated, and
means for transmitting the content, the hash value, the digital signature, the signee, and the provenance information to the content management apparatus, and
wherein the content management apparatus includes
means for performing control so as to store the content, the hash value, the digital signature, the signee, and the provenance information in a storage device.

21. The authenticity verification system according to claim 20, further comprising:
means for acquiring content to be determined and provenance information added to the content to be determined; and
means for determining authenticity of the content to be determined based on whether the content in content generation corresponding to the content to be determined is stored in the storage device and a result of verification based on the provenance information.

22. A control method of a content management apparatus, the method comprising:
a step of receiving content in content generation from a content generation apparatus;
a step of storing the content in content generation in a storage device;
a step of acquiring content to be determined and provenance information added to the content to be determined; and
a step of determining authenticity of the content to be determined based on whether the content in content generation corresponding to the content to be determined is stored in the storage device and a result of verification based on the provenance information.

23. A control method of a content generation apparatus, the method comprising:
a step of generating content;
a step of executing a hash function to the content to generate a hash value;
a step of generating a digital signature by encrypting the hash value using a secret key;
a step of adding information about the content generation apparatus to the digital signature as a signee;
a step of generating provenance information indicating that the content is generated; and
a step of transmitting the content, the hash value, the digital signature, the signee, and the provenance information to a content management apparatus.

24. A program causing a computer to function as the respective means of the content management apparatus according to any of claims 1 to 16.

25. A program causing a computer to function as the respective means of the content generation apparatus according to any of claims 17 to 19.
